# EUROPEAN PATENT SPECIFICATION

(11) **EP 0 907 057 B1**
(45) Date of publication and mention of the grant of the patent: **28.05.2003**
(21) Application number: 98118651.3
(22) Date of filing: 02.10.1998
(51) Int. Cl.: F25B 41/06

(54) **Thermostatic expansion valve with integral electrically operated inlet valve**
Thermostatisches Expansionsventil mit integriertem, elektrisch betätigbarem Einlassventil
Soupape thermostatique de détente avec soupape d'admission intégrée actionnée par électricité

(30) Priority: 03.10.1997 US 943400
(43) Date of publication of application: 07.04.1999
(73) Proprietor: EATON CORPORATION, Cleveland, Ohio 44114-2584 (US)
(72) Inventor: Malone, Peter John, Des Planes, Illinois 60018 (US); Eybergen, William Nicholas, Windsor, Ontario N9G 2P6 (CA)
(74) Representative: Geyer, Ulrich F., Dr. Dipl.-Phys.

(56) References cited:
- EP-A- 0 664 425
- US-A- 4 646 532
- PATENT ABSTRACTS OF JAPAN vol. 096, no. 012, 26 December 1996 & JP 08 210733 A (NIPPONDENSO CO LTD;FUJI KOKI SEISAKUSHO:KK), 20 August 1996
- PATENT ABSTRACTS OF JAPAN vol. 011, no. 228 (M-610), 24 July 1987 & JP 62 041481 A (SAGINOMIYA SEISAKUSHO INC), 23 February 1987

## Description

### BACKGROUND OF THE INVENTION

The present invention relates to thermally responsive or thermostatically operated valves and particularly relates to thermostatically operated expansion valves of the type employed for controlling flow of refrigerant in an air conditioning or refrigeration system. In air conditioning systems employed for passenger compartment cooling of motor vehicles, it is known to employ an expansion valve for controlling refrigerant flow from the high pressure side of the compressor through the condenser to the evaporator by utilizing a valve which is moved by the force of expansion of fluid in a closed chamber which senses the temperature of the flow discharging from the evaporator. Such valves are referred to as thermostatic expansion valves and have found widespread use in automotive air conditioning systems.

Currently, it is becoming increasingly popular to provide dual evaporators in a single automotive air conditioning system such as one for front seat passengers and another for rear seat passengers; or, alternatively separate evaporators for cooling left and right seat row positions such as for the driver and front seat passenger. Where dual evaporators are employed, it has been desired to provide a way or means of shutting off one of the evaporators remotely with an electrically operated device without incurring the cost penalty of providing separate electrically controlled shut off valves in the refrigerant line to the evaporators.

The thermostatically controlled mechanical expansion valves presently employed in automotive air conditioning systems have experienced widespread usage because of their low cost and simplicity of construction. However, thermostatically controlled expansion valves are only able to react to temperature changes in the flow of refrigerant discharging from the evaporator; and, there is no way to provide external user control of the valve once it has been calibrated and installed in the system. It has been desired to provide remote electrical control of the vehicle air conditioning system to provide the user with a greater degree or level of control and to not rely only on the ability of the thermostatic expansion valve to provide proper control by reacting to evaporator discharge temperature.

Furthermore, it has been desired to provide for electrical control of refrigerant flow in a refrigeration or air conditioning system which enables the use of a microcomputer to employ selected algorithms to provide control of refrigerant flow in a manner providing improved cooling control.

Thus, it has been desired to provide a way or means of remotely electrically controlling the flow of refrigerant to plural evaporators in a vehicle air conditioning system. It has further been desired to provide for remotely shutting off the flow of refrigerant to one of a plurality of evaporators in a vehicle air conditioning system in a manner which is sufficiently low in cost to render the system cost effective in the high volume motor vehicle marketplace.

Further attention is drawn to JP-A-08210733 which discloses an electromagnetic valve mounted on the side of an epansion valve to prevent liquid hammer noise. A primary passage is provided through the valve body to the electromagnetic valve. A seal is retained at the end of an armature and closes and opens a high pressure flow path through the primary passage.

In accordance with the invention a thermostatic expansion valve assembly as set forth in claim 1 and a method of electrically controlling a supply of refrigerant to a thermostatic expansion valve as set forth in claim 7 are provided. Preferred embodiments are disclosed in the dependent claims.

### BRIEF SUMMARY OF THE INVENTION

It is an object of the present invention to provide for remotely shutting off the flow of refrigerant to an evaporator of a refrigeration system.

It is a further object of the present invention to provide for remotely electrically shutting off the flow of refrigerant to the inlet of a refrigerant expansion valve.

It is another object of the present invention to provide for remotely controlling an electrically operated shut off in the inlet of a thermostatically operated refrigerant expansion valve.

It is another object of the present invention to provide the possibility of a solenoid operated valve in the inlet upstream of the thermostatically controlled valve member in a refrigerant expansion valve.

The present invention provides a thermally responsive mechanical expansion valve for controlling flow of refrigerant from the compressor discharge side to the evaporator in a cooling system. The invention provides for the addition of an electrically operated valve member in the inlet passage of a thermostatic mechanical expansion block valve to permit shut off of refrigerant flow to the thermostatically operated expansion valve member. In the preferred practice, the electric operator is an electromagnetic solenoid which is attached to the end of the block valve opposite the fluid pressure capsule typically provided for thermostatic operation of the expansion valve member. The present invention thus provides for a simple modification or adaptation of an existing thermostatically operated mechanical expansion valve for controlling refrigerant flow to an evaporator in a manner which enables remote electrical shut off of the expansion valve at its inlet without the necessity of costly changes in the manufacturing of the expansion valve which would require expensive production tooling changes. The ability to provide remote electrically operated shut off of a thermostatically operated refrigerant expansion valve is particularly suitable for systems employing plural evaporators inasmuch as the user may conveniently remotely shut off the refrigerant flow to any of the evaporators as desired.

### BRIEF DESCRIPTION OF THE DRAWINGS

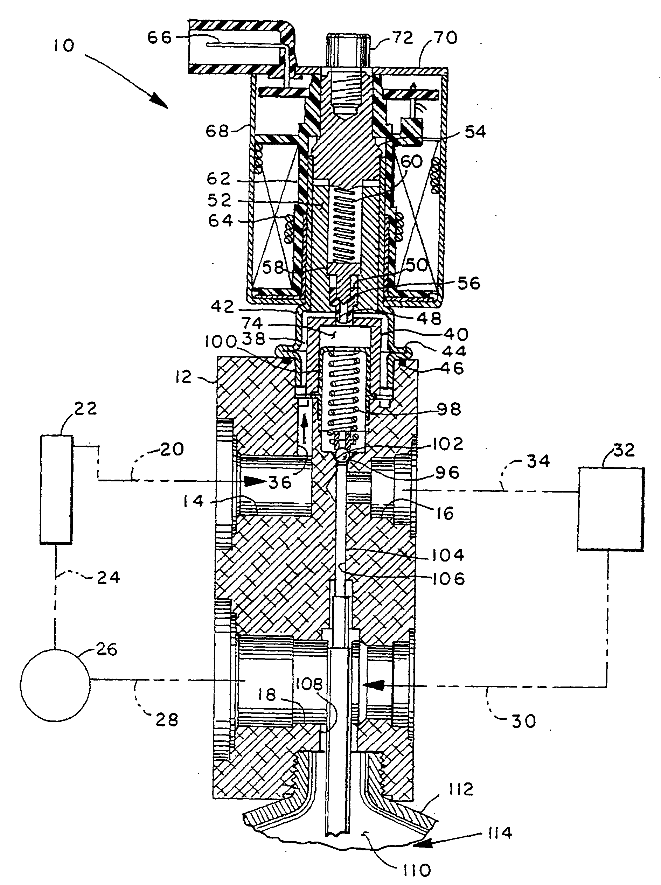

The sole drawing of the invention is a cross-sectional view of the valve assembly of the present invention.

### DETAILED DESCRIPTION OF THE INVENTION

Referring to the drawing, the valve assembly is indicated generally at 10 and includes a valve body or block 12 having formed therein a high pressure inlet passage 14 and a reduced pressure outlet passage 16 and a flow through sensing passage 18.

It will be understood that upon installation of valve 10 in a refrigeration system, inlet passage 14 is connectable via a conduit 20, indicated in dashed outline, communicating with the outlet of a condenser 22 having its inlet connected via a conduit 24, shown in dashed outline, to the discharge or outlet of a compressor 26. The inlet of the compressor is connectable via a conduit 28, shown in dashed outline, communicating with passage 18. The inlet end of passage 18 is connectable via a conduit 30, shown in dashed outline, communicating with the discharge outlet of an evaporator 32. The inlet of the evaporator is connected via conduit 34, shown in dashed outline, to the valve outlet passage 16.

The inlet passage 14 of valve assembly 10 communicates with a transfer passage 36 formed in the body 12 which transfer passage communicates with an annular region 38 formed between an inverted cup-shaped valve member 40 and a tubular cover or guide member 42 received in a recess formed in the upper end of the valve body 12. The end of the tubular member 42 is preferably threadedly engaged in the valve body for retention therein. Tubular member 42 has a convolution 44 formed thereon, the lower surface of which seals against a resilient seal ring 46 disposed on the upper surface of the body 12. Valve member 40 has a valve seat 48 formed in the closed end thereof and which is disposed for contact by a resilient obturator or valving member 50. Resilient valving member 50 is biased downwardly against a shoulder 56 formed in a slidably moveable armature 52 by a plunger or pressure relief member 58 which closes a center hole in valve member 50 and which is in turn biased downwardly by the lower end of spring 60 having its upper end registered against pole piece 54. The spring 60 thus biases the valve member 50 and the armature 52 in a downward direction such that the valve member 50 is seated on valve seat 48.

The tubular member 42, which functions as a guide for moveable armature 52, has received thereover a bobbin 62 which has wound thereon a coil of conductive material 64 which terminates in a pair of electrical connector terminals one of which is illustrated and denoted by reference numeral 66 and which is adapted for external electrical connection thereto. The coil 64 and bobbin 62 are surrounded by a ferromagnetic canister 68 or cover which completes the flux loop about the coil in cooperation with a flux collecting retaining washer 70 which is secured onto pole piece 54 by suitable fastening means such as screw 72.

In operation, valve 50 is normally in the closed position, as is the pressure relief member 58. Upon energization of the coil 64, the force of magnetic attraction moves armature 52 toward the pole piece 54 causing valve member 50 to be lifted from valve seat 48 permitting flow to the interior chamber 74 of the member 40.

Chamber 74 communicates with a valve member in the form of ball 96 which is biased by spring 98 retained by a cup 100 nested in cup 40 in the valve body. The ball valve member 96 is biased against a valve seat 102 formed in the body 12 and valve seat 102 communicates with the outlet passage 16.

An operating rod 104 is slidably guided in the body in a bore 106; and, the rod 104 extends through sensing passage 18 and aperture 108 and outwardly of the body into chamber 110 of the thermally responsive actuator indicated generally at 114 within capsule 112. The rod is actuated by a diaphragm (not shown) which forms a part of actuator 114. Capsule 112 threadedly engages the end of the valve body adjacent passage 18 and is thus attached thereto, in a manner known in the art.

In operation, thermally responsive actuator 114 effects movement of the rod 104 to cause opening of valve 96 from the valve seat 102 to permit flow to passage 16 in a manner well known in the art.

The present invention thus provides for a remotely controlled shut off of the flow in the inlet of a thermostatically operated expansion valve and has particular application to thermostatically operated expansion valves employed for controlling the flow of refrigerant in a refrigeration or air conditioning system.

The valve assembly of the present invention may be made by modifying an existing thermo expansion valve of the type manufactured for controlling refrigerant flow in automotive air conditioning systems to include a solenoid attached to the valve block on the end opposite the thermally responsive operator for controlling movement of the expansion valve member within the block. A similar modification may be made to a thermostatically operated expansion valve having its inlet and outlet disposed at right angles in the valve body by providing an opening in the valve body and attaching a solenoid operator and valve with the armature aligned with the valve operating rod.

Although the present invention has been described hereinabove with respect to the illustrated embodiments, it will be understood that the invention is capable of modification and variation and is limited only by the scope of the following claims.

## Claims

1. A thermostatic expansion valve assembly (10) with integral electrically operated inlet shut-off for use in controlling refrigerant flow, said valve assembly (10) comprising:
(a) a structure defining a valve body (12) having a high pressure inlet passage (14), a first annular valve seat (102) in said inlet passage (14) and an outlet passage (16) communicating with said valve seat (102) and a sensing passage (18);
(b) a first valve obturator (96) moveable between a position opening and a position closing said first valve seat (102);
(c) thermally responsive means, including an actuator member, (114), operative in response to temperature changes of flow in said sensing passage (18) to move said first obturator between said first and second positions;
(d) a second annular valve seat (48) disposed in said inlet passage (14) upstream of and communicating with said first annular valve seat (102), and a second obturator (50) moveable from a position opening and a position closing said second valve seat (48) and blocking flow to said first valve seat (102); and,
(e) an electrically actuated device (52, 54, 58, 60, 62, 64, 66, 68, 70, 72) operable upon energization to move said second obturator (50) to said opening position, **characterized in that**
said electrically actuated device and said second obturator (50) are disposed at one end of said body (12) adjacent said high pressure inlet passage (14), said high pressure inlet passage (14) communicating with an annular region (38), a cup-shaped mamber (40) disposed in said annular region (38), said second valve seat (48) being formed in said cup-shaped member (40).

2. The assembly (10) defined in claim 1, wherein said electrically actuated device includes an electromagnetic operator.

3. The assembly (10) defined in claim 1 or 2, wherein said electrically acutated device includes means (60, 98) biasing said first and second obturators (96, 50) to the closed position.

4. The assembly (10) defined in one of the preceding claims, wherein said electrically actuated device includes a solenoid coil (64) with a moveable armature (52), wherein said armature movement is aligned with the movement of said thermally responsive means actuator (114).

5. The assembly defined in one of the preceding claims, wherein said electrically actuated device is disposed externally of said valve body (12).

6. The assembly (10) defined in one of the preceding claims, wherein said thermally responsive means is disposed on one end of said body (12) and said electrically actuated device is disposed on an end of said body (12) opposite said one end.

7. A method of electrically controlling a supply of refrigerant to a thermostatic expansion valve (10) comprising a valve body (12) having a high pressure inlet (14), a reduced pressure outlet (16) and a valve member (96) moved with respect to a valving port (102) by a thermally responsive actuator (114) for controlling flow from the inlet (14) to the outlet (16) comprising:
(a) disposing a moveable obturator (50) in the inlet upstream of the moveable valve member (96);
(b) disposing an electrically actuated operator (52, 53, 58, 60, 62, 64, 66, 68, 70, 72) on the valve body (12) and energizing the operator and moving the obturator (50) and opening the refrigerant supply to said valve member (96);
charactericed in that the method comprises
(c) disposing a cup-shaped member (40) in an annular region (38) at one end of the valve body (12) and communicating the annular region (38) with said high pressure inlet (14); and
(d) forming a valve seat (48) in said cup-shaped member (40) for said obturator (50).

8. The method defined in claim 7, wherein said step of energizing the operator includes electromagnetically moving said obturator (50).

9. The method defined in claim 7 or 8, wherein said step of disposing a moveable operator includes biasing said operator to the closed position.

10. The method defined in one of the claims 7 to 9, wherein said step of disposing an electrically actuated operator includes attaching the operator to the valve body (12) on an end remote from said thermally responsive actuator (114).

## Patentansprüche

1. Eine thermostatische Expansionventilanordnung (10) mit einer integralen elektrisch betätigten Einlassabschaltung zur Verwendung bei der Steuerung des Kühlmittelflusses, wobei die Ventilanordnung (10) folgendes aufweist:
(a) eine Struktur zur Definition eines Ventilkörpers (12) mit einem Hochdruckeinlassdurchlass (14), einem ersten Ringventilsitz (102) in dem Einlassdurchlass (14) und einen Auslassdurchlass (16) in Verbindung mit dem Ventilsitz (102) und einem Abfühldurchlass (18);
(b) eine erste Ventilabdeckung (96) beweglich zwischen einer den ersten Ventilsitz (102) öffnenden und einer den ersten Ventilsitz (102) schließenden Position;
(c) thermisch ansprechende Mittel einschließlich eines Betätigungsglieds (114), die betriebsmäßig ansprechend auf Temperaturänderungen des Flusses oder der Strömung in dem Abfühldurchlass (18), die erste Abdeckung (96) zwischen den ersten und zweiten Positionen bewegen;
(d) ein zweiter ringförmiger Ventilsitz (48) angeordnet in dem Einlassdurchlass (14) stromaufwärts gegenüber und in Verbindung stehend mit dem ersten ringförmigen Ventilsitz (102), und einer zweiten Abdeckung (50) beweglich aus einer Position des Öffnens und einer Position des Schließens, und zwar des zweiten Ventilsitzes (48) und des Blockierens der Strömung bzw. des Flusses zu dem ersten Ventilsitz (102); und
(e) ein elektrisch betätigte Vorrichtung (52, 54, 58, 60, 62, 64, 66, 68, 70, 72) betätigbar bei Erregung, um die zweite Abdeckung (50) zu der Öffnungsposition zu bewegen,
**dadurch gekennzeichnet,**
**dass** die elektrisch betätigte Vorrichtung und die zweite Abdeckung (50) an einem Ende des Körpers (12) benachbart zu dem Hochdruckeinlassdurchlass (14) angeordnet sind, wobei der Hochdruckeinlassdurchlass (14) mit einer Ringzone (38) in Verbindung steht, wobei ein schalenförmiges Glied (40) in der erwähnten Ringzone (38) angeordnet ist und der zweite Ventilsitz (48) in dem napfförmigen Glied (40) geformt ist.

2. Anordnung (10) nach Anspruch 1, wobei die elektrisch betätigte Vorrichtung einen elektromagnetischen Betätiger aufweist.

3. Anordnung (10) nach Anspruch 1 oder 2, wobei die elektrisch betätigte Vorrichtung Mittel (60, 98) aufweist, welche die ersten und zweiten Abdeckungen (96, 50) in die geschlossene Position vorspannen.

4. Anordnung (10) nach einem der vorhergehenden Ansprüche, wobei die elektrisch betätigte Vorrichtung eine Elektromagnetspule (64) mit einem beweglichen Anker (52) aufweist, wobei die Ankerbewegung mit der Bewegung des Betätigers (114) der thermisch ansprechenden Mittel ausgerichtet ist.

5. Anordnung nach einem der vorhergehenden Ansprüche, wobei die elektrisch betätigte Vorrichtung außerhalb des Ventilkörpers (12) angeordnet ist.

6. Anordnung (10) nach einem der vorhergehenden Ansprüche, wobei die thermisch ansprechenden Mittel an einem Ende des Körpers (12) angeordnet sind, und wobei die elektrisch betätigte Vorrichtung an einem Ende des Körpers (12) entgegengesetzt zu dem erwähnten einen Ende angeordnet ist.

7. Ein Verfahren zur elektrischen Steuerung einer Versorgung von Kühlmittel zu einem thermostatischen Expansionsventil (10), wobei Folgendes vorgesehen ist:
ein Ventilkörper (12) mit einem Hochdruckeinlass (14), einem Auslass (16) mit reduziertem Druck und ein Ventilglied (96) bewegt bezüglich eines Ventilanschlusses (102) durch einen thermisch ansprechenden Betätiger (114) zur Steuerung des Flusses vom Einlass (14) zum Auslass (16), wobei folgendes vorgesehen ist:
(a) Anordnen einer beweglichen Abdeckung (50) im Einlass stromaufwärts gegenüber dem beweglichen Ventilglied (96);
(b) Anordnen eines elektrisch betätigten Betätigers (52, 53, 58, 60, 62, 64, 66, 68, 70, 72) am Ventilkörper (12) und Erregung des Betätigers und Bewegen der Abdeckung (50) und Öffnen der Kühlmittelversorgung zu dem erwähnten Ventilglied (96);
**dadurch gekennzeichnet, dass** das Verfahren folgendes aufweist:
(c) Anordnen eines napfförmigen Gliedes (40) in einer Ringzone (38) an einem Ende des Ventilkörpers (12) und Verbinden der Ringzone (38) mit dem Hochdruckeinlass (14); und
(d) Formen eines Ventilsitzes (48) in dem napfförmigen Glied (40) für die Abdeckung (50).

8. Verfahren nach Anspruch 7, wobei der Schritt des Erregens des Betätigers das elektromagnetische Bewegen der Abdeckung (50) umfasst.

9. Verfahren nach Anspruch 7 oder 8, wobei der Schritt des Anordnens eines beweglichen Betätigers das Vorspannen des Betätigers in die geschlossene Position umfasst.

10. Verfahren nach einem der Ansprüche 7 bis 9, wobei der Schritt des Anordnens eines elektrisch betätigten Betätigers das Anbringen des Betätigers am Ventilkörper (12) umfasst, und zwar an dem Ende entfernt von dem thermisch ansprechenden Betätiger (114).

## Revendications

1. Structure de soupape à dilatation thermostatique (10) munie d'un obturateur d'entrée actionné électriquement d'une seule pièce destiné à être utilisé pour contrôler un débit de réfrigérant, la structure de soupape (10) comprenant :
(a) une structure définissant un corps de soupape (12) ayant un passage d'entrée haute pression (14), un premier siège de soupape annulaire (102) dans le passage d'entrée (14), et un passage de sortie (16) communiquant avec le siège de soupape (102) et un passage de détection (18) ;
(b) un premier obturateur de soupape (96) mobile entre une position d'ouverture et une position de fermeture du premier siège de soupape (102) ;
(c) un moyen sensible thermiquement comprenant un élément actionneur (114) agissant en réponse à des changements de température d'écoulement dans le passage de détection (18) pour déplacer le premier obturateur (96) entre les première et seconde positions ;
(d) un second siège de soupape annulaire (48) disposé dans le passage d'entrée (14) en amont du premier siège de soupape annulaire (102) et en communication avec celui-ci, et un second obturateur (50) mobile entre une position d'ouverture et une position de fermeture du second siège de soupape (48) et bloquant l'écoulement vers le premier siège de soupape (102) ; et
(e) un dispositif actionné électriquement (52, 54, 58, 60, 62, 64, 66, 68, 70, 72) actionnable à la suite de son alimentation pour déplacer le second obturateur (50) vers la position d'ouverture,
**caractérisé en ce que** le dispositif actionné électriquement et le second obturateur (50) sont disposés à l'une des extrémités du corps (12) au voisinage du passage d'entrée haute pression (14), le passage d'entrée haute pression (14) communiquant avec une région annulaire (38), un élément en forme de coupe (40) disposé dans la région annulaire (38), le second siège de soupape (48) étant formé dans l'élément en forme de coupe (40).

2. Structure (10) selon la revendication 1, dans laquelle le dispositif actionné électriquement comprend un actionneur électromagnétique.

3. Structure (10) selon la revendication 1 ou 2, dans laquelle le dispositif actionné électriquement comprend un moyen (60, 98) sollicitant les premier et second obturateurs (96, 50) vers la position fermée.

4. Structure (10) selon l'une des revendications précédentes, dans laquelle le dispositif actionné électriquement comprend un enroulement d'électroaimant (64) avec une armature mobile (52), dans lequel le mouvement de l'armature est aligné avec le mouvement de l'actionneur sensible thermiquement (114).

5. Structure selon l'une des revendications précédentes, dans laquelle le dispositif actionné électriquement est disposé à l'extérieur du corps de soupape (12).

6. Structure (10) selon l'une des revendications précédentes, dans laquelle le moyen sensible thermiquement est disposé à une extrémité du corps (12) et le dispositif actionné électriquement est disposé à une extrémité du corps (12) opposée à la première extrémité.

7. Procédé de commande électrique de fourniture d'un réfrigérant à une soupape thermostatigue à dilatation (10) comprenant un corps de soupape (12) ayant une entrée haute pression (14), une sortie à pression réduite (16) et un élément de soupape (96) déplacé par rapport à un accès de soupape (102) par un actionneur sensible thermiguement (114) pour commander l'écoulement de l'entrée (14) vers la sortie (16) comprenant les étapes suivantes :
(a) disposer un obturateur mobile (50) dans le flux d'entrée de l'élément de soupape mobile (96) ;
(b) disposer un opérateur actionné électriquement (52, 53, 58, 60, 62, 64, 66, 68, 70, 72) sur le corps de soupape (12) et alimenter l'opérateur et déplacer l'obturateur (50) et ouvrir l'alimentation en réfrigérant vers l'élément de soupape (96) ;
**caractérisé en ce que** le procédé comprend les étapes suivantes :
(c) disposer un élément en forme de coupe (40) dans une région annulaire (38) à une extrémité du corps de soupape (12) et faire communiquer la région annulaire (38) avec l'entrée haute pression (14) ; et
(d) former un siège de soupape (48) dans l'élément en forme de coupe (40) pour l'obturateur (50).

8. Procédé selon la revendication 7, dans lequel l'étape d'alimentation de l'opérateur inclut, un déplacement électromagnétique (50).

9. Procédé selon la revendication 7 ou 8, dans lequel l'étape consistant à disposer un opérateur mobile comprend l'étape consistant à solliciter l'opérateur vers la position fermée.

10. Procédé selon l'une des revendications 7 à 9, dans lequel l'étape consistant à disposer un opérateur actionné électriquement comprend la fixation de l'opératéur au corps de soupape (12) à une extrémité éloignée de l'actionneur sensible thermiquement (114).
